(19) Europäisches Patentamt
European Patent Office
Office européen des brevets

(11) **EP 2 405 373 A2**

(12) **DEMANDE DE BREVET EUROPEEN**

(43) Date de publication:
**11.01.2012 Bulletin 2012/02**

(51) Int Cl.:
***G06F 17/50*** *(2006.01)*     *G06F 17/17* *(2006.01)*
***G06T 17/30*** *(2006.01)*

(21) Numéro de dépôt: **11305882.0**

(22) Date de dépôt: **08.07.2011**

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**
Etats d'extension désignés:
**BA ME**

(30) Priorité: **09.07.2010 FR 1002904**

(71) Demandeur: **DASSAULT AVIATION**
**F-75008 Paris (FR)**

(72) Inventeurs:
- **Perrier Philippe**
  **78860 Saint Nom la Breteche (FR)**
- **Clemençon, Boris**
  **75018 Paris (FR)**

(74) Mandataire: **Blot, Philippe Robert Emile**
**Cabinet Lavoix**
**2, place d'Estienne d'Orves**
**75441 Paris Cedex 09 (FR)**

(54) **Procédé et système de modélisation d'une surface géométrique**

(57) Ce procédé est un procédé de modélisation d'une surface géométrique à partir de points de passage, dont l'équation est exprimée à partir d'une base de fonctions paramétriques en fonction de points de contrôle ($P_{nm}$). La position d'un point de passage et des points des surfaces élémentaires adjacentes est déterminée en fonction de la position d'un sous-ensemble de points de contrôle. Le procédé comprend les étapes de :
- sélection (17) de ladite base, en fonction d'un niveau de continuité minimal choisi
- sélection (19), pour un point de passage prédéterminé, d'un voisinage de ce point ;
- détermination (25), en fonction de conditions osculatrices du point prédéterminé, de la position des points de contrôle associés à chaque point de passage du voisinage,
- détermination de la position des points de la surface du voisinage, en fonction de la position desdits points de contrôle associés à chaque point de passage.

FIG.3

EP 2 405 373 A2

**Description**

La présente invention concerne un procédé et un système de modélisation d'une surface géométrique pour la conception de pièces, à partir d'une pluralité de points de passage auxquels sont associées des conditions osculatrices, ladite surface géométrique comprenant au moins une surface élémentaire dont les sommets sont des points de passage, l'équation de la surface géométrique étant exprimée à partir d'une base de fonctions paramétriques destinée à générer ladite surface géométrique par interpolation desdits points de passage, en fonction de la position d'un ensemble de points de contrôle.

Elle s'applique en particulier à la modélisation de surfaces gauches, pour la conception de pièces dans les domaines de l'aéronautique, de l'automobile ou de la construction navale, ou dans le domaine de l'infographie 3D et plus généralement dans tous les domaines où sont utilisées des surfaces gauches.

Les propriétés physiques d'une telle surface, notamment ses propriétés aérodynamiques, dépendent en particulier du niveau de continuité des courbures.

Par ailleurs, pour garantir les propriétés physiques de la surface, il est nécessaire que ces courbures soient lisses, c'est-à-dire qu'elles ne présentent pas d'oscillations indésirables. En effet, outre son aspect esthétique, le lissage d'une surface conditionne ses propriétés aérodynamiques ou hydrodynamiques.

Les surfaces gauches présentent ainsi des courbures complexes, et ne peuvent généralement pas être modélisées au moyen de systèmes d'équations linéaires ou affines, ni être assimilées à des surfaces guidées ou de révolution.

Les surfaces gauches sont souvent modélisées par des *Non-Uniform Rational B-Splines* (NURBS). Une surface NURBS est définie à partir de deux vecteurs de noeuds non-décroissants $[u_0, u_1...u_N]$ et $[v_0, v_1,...v_M]$, et d'une pluralité de points de contrôle $P_{kl}$ définissant une enveloppe convexe de la surface modélisée, auxquels sont associés des poids $W_{kl}$. Les NURBS sont un standard largement utilisé qui permet notamment de modéliser les coniques ainsi que toute surface polynomiale par morceaux. Dans le cas où les poids $W_{kl}$ *sont* égaux, l'équation de la surface paramétrée S(u, v) se ramène à une modélisation de type B-spline qui s'exprime par :

$$S(u,v) = \sum_{k=0,l=0}^{M,N} b_k(u) b_l(v) P_{kl}$$

où u et V constituent les premier et second paramètres de la surface S et où les bases de fonctions *paramétriques $b_k$ (u) et $b_i$ (v)* sont des fonctions polynomiales par morceaux de degré d spécifié par l'utilisateur, appelées *fonctions b-spline.* Elles ne dépendent respectivement que des vecteurs de noeuds $[u_0, u_1,\cdots, u_N]$ et $[v_0, v_1,..., v_M]$.

Dans le cas général (vecteurs de noeuds strictement croissants), une surface NURBS est de continuité paramétrique $C^{d-1}$ (c'est-à-dire que la fonction est d-1 fois dérivable en tout point). Il est donc possible de choisir le degré d de la NURBS afin d'imposer la continuité désirée sur l'ensemble de la surface. Par exemple, une NURBS de degré 3 permet d'assurer un niveau de continuité $C^2$.

On déforme alors une surface soit en déplaçant un ou plusieurs de ses points de contrôle $P_{kl}$, points de l'espace qui ne sont pas sur la surface, soit en modifiant le ou les vecteur(s) de noeuds $[u_0, u_1,..., u_N]$ et $[v_0, v_1,..., v_M]$, soit en modifiant les poids $W_{kl}$, dans le cas d'une surface NURBS rationnelle. Les seconde et troisième approches sont très peu intuitives et généralement ignorées, et seul le déplacement de points de contrôle est utilisé. De cette manière, on montre que ces déformations sont locales, i.e. que l'étendue des déformations est restreinte et dépend du degré *d* choisi par l'utilisateur.

Mais la manipulation des NURBS par ses points de contrôle présente l'inconvénient d'être imprécise car lesdits points de contrôle ne sont pas sur la surface. Cette approche est suffisante en infographie pour obtenir rapidement des formes esthétiques, mais elle devient laborieuse pour concevoir précisément des formes avec certaines contraintes technologiques (points de passage, tangence, cotes, ...).

Par ailleurs, pour une surface NURBS de degré d, le nombre de points de contrôle est de $(M - (d + 1))(N - (d + 1)) = MN - (M + N)(d + 1) + (d + 1)^2$, ce qui représente un nombre de points de contrôle très rapidement croissant en fonction du niveau de continuité souhaité et dont la relation physique avec la forme de la surface est peu intuitive.

Les algorithmes d'interpolation de type « dessin inverse » permettent de pallier en partie cet inconvénient et de manipuler des points sur la forme. Par exemple, l'algorithme d'interpolation B-spline cubique, décrit notamment dans le document « A survey of curves and surface methods in CAGD » (Boehm W. et al., Computer Aided Geometric Design, vol. 1, pp 1-60), dans le livre « The NURBS Book » (Tiller W. et Piegl L., Springer-Verlag Berlin) et dans « Numerical Recipes in C : The Art of Scientific Computing » (Press W. et al., Cambridge University Press), permet d'interpoler une grille cartésienne de points de passage spécifiés notés $Q_{i,j}$ par une B-spline de degré 3 (dont les points de contrôle sont toujours notés $P_{i,j}$). Chaque ligne de la grille $Q_{i,*}$ ou $Q_{*,j}$ reliant une rangée de points de passage est appelée « latte », et les deux familles de lattes en u et en V se coupent mutuellement aux points de passage. Cette approche, générant des surfaces de continuité C$^2$, est séduisante, mais a l'inconvénient de faire perdre certaines propriétés, comme la localité. Notons que des variantes permettent d'imposer des contraintes supplémentaires, comme la tangente afin d'améliorer la précision.

La première étape de cet algorithme consiste à construire deux vecteurs de noeuds $[u_0, u_1, \cdots, u_N]$ et $[v_0, v_1, ..., v_M]$. Cette construction est abondamment détaillée dans la littérature (voir « The NURBS Book »). Pour chaque point de passage $Q_{i,j}$, on peut écrire

$$Q_{i,j} = \sum_{k=0, l=0}^{M,N} b_k(u_i) b_l(v_j) P_{kl}$$

En reproduisant cette équation pour tous les points de passage, on peut écrire le système linéaire Q=BP où le vecteur Q contient les points de passage, où le vecteur P contient les points de contrôle et où B est une matrice carrée à bande. En supposant la matrice B inversible, on calcule immédiatement les points de contrôle P par la relation
P=B$^{-1}$Q

Avec les vecteurs de noeuds, ces points de contrôle définissent ainsi la surface B-spline interpolant les points de passage.

Remarquons que la matrice B$^{-1}$, inverse d'une matrice à bande, est une matrice dense, de telle sorte que la modification d'un seul point de passage $Q_{ij}$ modifie l'ensemble des points de contrôle P et conduit ainsi à une nouvelle surface différente en tous points de la précédente, sauf aux points de passage non modifiés.

Cette non-localité des déformations complique fortement la conception de formes, puisqu'il n'est pas possible de modifier une partie de la surface sans en déformer le reste.

L'invention a donc pour but de proposer un procédé et un système de modélisation remédiant aux inconvénients des modeleurs selon l'état de la technique et permettant de modéliser facilement, c'est-à-dire avec un nombre minimal de moyens de contrôle, et de manière intuitive, tout type de surface gauche.

A cet effet, l'invention a pour objet un procédé de modélisation du type précité, caractérisé en ce que la position d'un point de passage et des points des surfaces élémentaires adjacentes à ce point de passage est déterminée en fonction de la position d'un sous-ensemble de points de contrôle associé à ce point de passage, à l'exclusion des points de contrôle non compris dans ce sous-ensemble, les sous-ensembles de points de contrôle associés à des points de passage distincts étant disjoints, et en ce que le procédé comprend les étapes suivantes, mises en oeuvre par une unité de traitement et de stockage comprenant un processeur et une mémoire :

- sélection de la base de fonctions paramétriques, en fonction d'un niveau de continuité minimal d'ordre k choisi, avec k nombre entier strictement supérieur à 1, sur l'ensemble de ladite surface géométrique ;
- sélection, pour un point de passage prédéterminé, d'un voisinage de ce point de passage prédéterminé, ledit voisinage comprenant au moins les surfaces élémentaires adjacentes à ce point de passage prédéterminé ;
- détermination, en fonction de valeurs fixées d'au moins une partie des conditions osculatrices dudit point de passage prédéterminé, de la position des points de contrôle du sous-ensemble associé à chaque point de passage de la surface géométrique compris dans ledit voisinage,
- détermination de la position des points de la surface géométrique compris dans ledit voisinage, en fonction de la position des points de contrôle du sous-ensemble associé à chaque point de passage de la surface géométrique compris dans ledit voisinage.

Selon d'autres aspects, le procédé de modélisation comporte l'une ou plusieurs des caractéristiques suivantes :

- la position des points de la surface géométrique est déterminée à partir d'une équation de la surface exprimée en fonction de la position desdits points de contrôle sous la forme :

$$S(u,v) = \sum_{n=0}^{(k+1)N} \sum_{m=0}^{(k+1)M} b_n^{k+1}(u) b_m^{k+1}(v) P_{n,m} \ ,$$

dans laquelle u et v sont des paramètres de la surface géométrique , S(u,v) désigne la position d'un point de la surface, chaque $P_{n,m}$ désigne un point de contrôle d'indices n et $m$, et $b_n^{k+1}$ et $b_m^{k+1}$ sont des fonctions de la base de fonctions paramétriques telles que $b_n^{k+1}(u)$ est non nulle si et seulement si $u_n \le u < u_{n+k+2}$ et continue d'ordre k sur ce même intervalle,

- l'étape de détermination de la position des points de contrôle comprend les étapes suivantes :

  - détermination, en fonction d'au moins une partie des conditions osculatrices dudit point de passage prédéterminé, de la valeur des dérivées partielles jusqu'à l'ordre k de la surface géométrique aux points de passage inclus dans ledit voisinage ; et
  - détermination, en fonction de la valeur desdites dérivées partielles, de la position desdits points de contrôle,

- l'étape de détermination de la valeur desdites dérivées partielles comprend une étape de détermination de la valeur de conditions osculatrices non fixées dudit point de passage prédéterminé,
- l'étape de détermination de la valeur desdites dérivées partielles comprend une étape d'optimisation d'un critère de qualité de la surface géométrique choisi par un utilisateur,
- l'étape de détermination de la valeur desdites dérivées partielles comporte:

  - une étape de détermination d'une énergie de déformation représentative d'une déformation locale dudit voisinage ; et
  - une étape de détermination de la valeur desdites dérivées partielles qui minimise ladite énergie de déformation,

- ladite énergie de déformation est déterminée à partir d'une combinaison des énergies de déformation des surfaces élémentaires et des énergies de déformation des arcs élémentaires dudit voisinage du noeud prédéterminé,
- les sous-ensembles de points de contrôle associés à des points de passage distincts quelconques sont disjoints,
- ledit voisinage est uniquement constitué des surfaces élémentaires ayant le point de passage prédéterminé pour sommet,
- la définition dudit voisinage du point de passage prédéterminé comprend la sélection des points de passage compris dans ledit voisinage,
- lesdites conditions osculatrices sont choisies parmi la position du point de passage, la direction des tangentes, la direction normale et la courbure de la surface en ce point, le centre et le rayon du cercle osculateur à la surface en ce point, et les directions de courbure principale,
- l'ensemble des étapes du procédé est mise en oeuvre de façon automatisée par un automate d'optimisation de forme.

L'invention a également pour objet un système de modélisation d'une surface géométrique pour la conception de pièces, à partir d'une pluralité de points de passage auxquels sont associées des conditions osculatrices, ladite surface géométrique comprenant au moins une surface élémentaire dont les sommets sont des points de passage, l'équation de la surface géométrique étant exprimée à partir d'une base de fonctions paramétriques destinée à générer ladite surface géométrique par interpolation desdits points de passage , en fonction de la position d'un ensemble de points de contrôle,
caractérisé en ce que la position d'un point de passage et des points des surfaces élémentaires adjacentes à ce point de passage est déterminée en fonction de la position d'un sous-ensemble de points de contrôle associé à ce point de passage, à l'exclusion des points de contrôle non compris dans ce sous-ensemble, les sous-ensembles de points de contrôle associés à des points de passage distincts étant disjoints, et en ce que le système comprend une unité de traitement et de stockage comprenant un processeur et une mémoire, comprenant :

- des moyens pour sélectionner la base de fonctions paramétriques, en fonction d'un niveau de continuité minimal d'ordre k choisi, avec k nombre entier strictement supérieur à 1, sur l'ensemble de ladite surface géométrique ;
- des moyens pour sélectionner, pour un point de passage prédéterminé, un voisinage de ce point de passage prédéterminé, ledit voisinage comprenant au moins les surfaces élémentaires adjacentes à ce point de passage prédéterminé ;
- des moyens pour déterminer, en fonction de valeurs fixées d'au moins une partie des conditions osculatrices dudit point de passage prédéterminé, la position des points de contrôle du sous-ensemble associé à chaque point de passage de la surface géométrique compris dans ledit voisinage,
- des moyens pour déterminer la position des points de la surface géométrique compris dans ledit voisinage, en fonction de la position des points de contrôle du sous-ensemble associé à chaque point de passage de la surface géométrique compris dans ledit voisinage.

L'invention sera davantage comprise au regard d'exemples de réalisation de l'invention qui vont maintenant être décrits en faisant référence aux figures annexées parmi lesquelles :

la figure 1 représente de manière schématique un système de modélisation selon un mode de réalisation de l'invention ;
- la figure 2 est un schéma en perspective d'une surface paramétrique telle que générée suivant le procédé selon l'invention ;
- la figure 3 est un schéma synoptique illustrant le procédé selon un mode de réalisation de l'invention ;
- la figure 4 représente une surface paramétrique initiale telle que générée lors de la mise en oeuvre du procédé selon l'invention ;
- la figure 5 est un schéma illustrant une fenêtre d'interface logicielle entre un utilisateur et le système selon un mode de réalisation de l'invention ;
- la figure 6 est un schéma en perspective représentant une surface paramétrique et des conditions osculatrices en un noeud de cette surface ;
- la figure 7 représente une surface paramétrique obtenue par modification de la surface illustrée sur la figure 4 ; et
- la figure 8 représente une autre surface paramétrique obtenue par modification de la surface illustrée sur la figure 4.

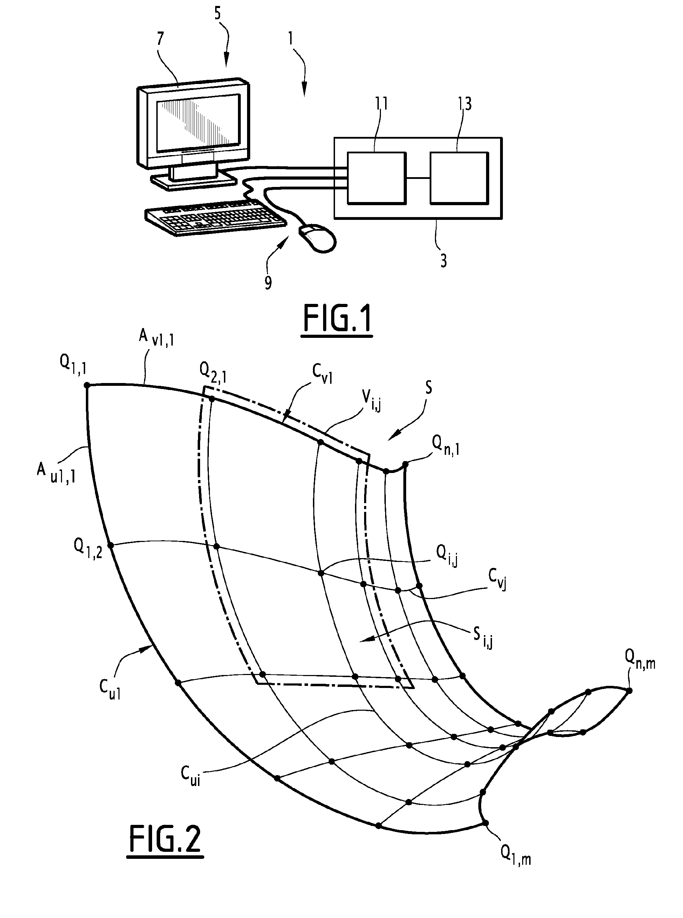

On a représenté sur la figure 1, un système 1 de modélisation d'une surface géométrique selon un mode de réalisation de l'invention. Ce système 1 comprend une unité 3 de traitement et de stockage et des moyens 5 d'interface entre cette unité 3 et un utilisateur.

Les moyens 5 d'interface comprennent un dispositif 7 d'affichage, par exemple un écran, et des périphériques 9 d'entrée, par exemple une souris, un clavier, un écran tactile ou un stylet. Les moyens 5 d'interface sont reliés à l'unité 3 de traitement et de stockage, et permettent à un utilisateur de choisir différents paramètres nécessaires à la modélisation d'une surface, notamment les conditions osculatrices en tout ou partie des points de passage de cette surface, le niveau de continuité souhaité pour la surface, la base de fonctions paramétriques utilisée pour modéliser cette surface et une fonction de lissage.

On comprendra ainsi dans la suite de la description que toutes les actions effectuées par l'utilisateur, notamment pour générer ou modifier une surface, sont réalisées par l'intermédiaire de ces moyens 5 d'interface.

L'unité 3 de traitement et de stockage comprend un processeur 11 et une mémoire 13. Le processeur 11 est apte à déterminer, à partir notamment des paramètres d'une surface choisis par un utilisateur, une équation de cette surface.

On a représenté sur la figure 2 une surface géométrique S telle que modélisée par le système et le procédé selon un mode de réalisation de l'invention.

La surface S est une surface paramétrée définie par une application:

$$\Re^2 \xrightarrow{\ S\ } \Re^3$$
$$(u,v) \longrightarrow S(u,v)$$

dans laquelle u et v désignent les deux paramètres de la surface, compris respectivement dans les intervalles $[u_0, u_N]$ et $[v_0, v_M]$. Le paramétrage de la surface S est donc global.

La surface S est constituée d'un assemblage de surfaces élémentaires adjacentes, définies par un réseau de courbes. Ce réseau est constitué de deux familles de lattes $Cu_i$ et $Cv_j$, se coupant mutuellement en une pluralité de points de passage $Q_{i,j}$, avec i compris entre 0 et n et j compris entre 0 et m, appelés points de passage de la surface S.

Une première famille de lattes non sécantes $Cu_i$, avec $i$ entier inférieur ou égal à N, est constituée de lattes définies par $N$ valeurs $u_i$ du paramètres u, comprises dans l'intervalle $[u_0, u_N]$, et telles que $u_i \le u_{i+1}$. Chacune des lattes $Cu_i$ est ainsi définie par une application $Cu_i(v)=S(u_i, v)$.

La deuxième famille de lattes non sécantes $Cv_j$, avec $j$ entier inférieur ou égal à $M$, est constituée de lattes définies par M valeurs $v_j$ du paramètres v, comprises dans l'intervalle $[v_0, v_M]$, et telles que $v_j \le v_{j+1}$. Chacune des lattes $C_j$ est ainsi définie par une application $Cv_j(u) = S(u, V_j)$.

Les points de passages $Q_{i,j}$ sont ainsi les points de la surface de coordonnées $S(u_i, v_j)$. Chaque surface élémentaire $S_{i,j}$ comprend quatre sommets et est délimitée par quatre arcs de courbes, appelés arcs élémentaires.

Dans la suite de la description, on notera $S_{i,j}$ une surface élémentaire de sommets $Q_{i,j}$, $Q_{i+1,j}$, $Q_{i,j+1}$ et $Q_{i+1,j+1}$, $Au_{i,j}$ un arc élémentaire de sommets $Q_{i,j}$ et $Q_{i,j+1}$ et $Av_{i,j}$ un arc élémentaire de sommets $Q_{i,j}$ et $Q_{i+1,j}$.

Par ailleurs, on appellera voisinage d'un point de passage $Q_{i,j}$ un ensemble connexe de surfaces élémentaires comprenant au moins les surfaces élémentaires adjacentes à ce point de passage, c'est-à-dire les surfaces élémentaires ayant ce point de passage pour sommet. Les surfaces élémentaires adjacentes au noeud $Q_{i,j}$ sont ainsi représentées

sur la figure 2 par l'ensemble $V_{i \cdot j}$.

Le procédé selon l'invention prévoit la construction, i.e. la modélisation, de la surface S par interpolation d'une grille cartésienne de points de passage ainsi que des k premières dérivées partielles associées (l'ordre k dépendant du niveau de continuité $C^k$ souhaité par l'utilisateur). On désignera par point de passage généralisé l'ensemble des coordonnées du point de passage et de ses dérivées jusqu'à l'ordre k dans chaque direction paramétrique, s'exprimant sous la forme générale :

$$\frac{\partial^p S}{\partial u^l \partial v^{p-l}}, 0 \leq p \leq k, 0 \leq l \leq p$$

Ces points de passage généralisés seront notés $Q'_{ij}$. Pour interpoler ces $(k+1)^2$ dérivées partielles, le procédé selon l'invention prévoit la construction de vecteurs de noeuds modifiés par rapport aux vecteurs de noeuds $[u_0, u_1, \cdots, u_N]$ et $[v_0, v_1, \cdots, v_M]$ initiaux tels que définis dans l'algorithme d'interpolation B-spline cubique présenté plus haut.

Par insertion de k noeuds dans chaque intervalle de noeuds initiaux $[u_i, u_{i+1}]$, le vecteur $[u_0, u_1, \cdots, u_N]$ est ainsi remplacé par le *vecteur* $[u'_0, u'_1, \cdots, u'_{(k+1)N}]$ tel que $u'_{(k+1)i} = u_i$ pour tout $i \in [0; N]$. De même, le vecteur $[v_0, v_1, \cdots, v_M]$ est remplacé par le *vecteur* $[v'_0, v'_1, \cdots, v'_{(k+1)M}]$ tel que $v'_{(k+1)} = v_j$ pour tout $j \in [0; M]$. Les noeuds insérés peuvent être, par exemple, uniformément répartis dans chaque intervalle $[u_i, u_{i+1}]$ .

La surface S est donc définie par un ensemble de $(k+1)(N+1) \times (k+1)(M+1)$ points de contrôle et la surface S peut être exprimée sous la forme :

$$S(u', v') = \sum_{n=0}^{(k+1)N} \sum_{m=0}^{(k+1)M} b_n^{k+1}(u') b_m^{k+1}(v') P_{n,m}$$

dans laquelle les fonctions $b_n^{k+1}$ et $b_m^{k+1}$ sont des fonctions b-spline de degré $k+1$ définies par les vecteurs de noeuds construits plus haut et assurant une continuité $C^k$ de la surface. Le fait d'assurer la continuité $C^k$ entraîne de fait la continuité géométrique $G^k$ de même ordre.

A chaque point de passage généralisé $Q'_{ij}$ est ainsi associé le couple de noeuds $(u'_{(k+1)i}, v'_{(k+1)j})$. Notamment, la position de $Q'_{ij}$ est donnée par :

$$S\left(u'_{(k+1)i}, v'_{(k+1)j}\right) = \sum_{n=0}^{(k+1)N} \sum_{m=0}^{(k+1)M} b_n^{k+1}\left(u'_{(k+1)i}\right) b_m^{k+1}\left(v'_{(k+1)j}\right) P_{n,m}$$

Similairement, les dérivées partielles s'écrivent

$$\frac{\partial^k S}{\partial u^l \partial v^{k-l}}\left(u'_{(k+1)i}, v'_{(k+1)j}\right) = \sum_{n=0}^{(k+1)N} \sum_{m=0}^{(k+1)M} \frac{d^l b_n^{k+1}}{du^l}\left(u'_{(k+1)i}\right) \frac{d^{k-l} b_n^{k+1}}{dv^{k-l}}\left(v'_{(k+1)j}\right) P_{n,m}$$

Au noeud $u_{(k+1)i}$, seules $(k+1)$ fonctions B-splines de degré k+1 sont non nulles. De même, au noeud $v_{(k+1)j}$, seules $(k+1)$ fonctions B-splines $b_m^{k+1}$ de degré k+1 sont non nulles. Ainsi, seuls les points de contrôle associés à ces fonctions non-nulles rentrent en compte pour l'interpolation d'un point de passage et de ses dérivées partielles. De même, on remarque que les (k+1) fonctions B-splines non-nulles en $u_{(k+1)i}$ sont nulles en dehors du domaine $[u_{(k+1)(i-1)}, u_{(k+1)(i+1)}]$ et que les (k+1) fonctions B-splines non-nulles en $v_{(k+1)j}$ sont nulles en dehors du domaine $[v_{(k+1)(j-1)}, v_{(k+1)(j+1)}]$

En conclusion, chaque point de contrôle $Q'_{ij}$ est associé à $(k+1)^2$ et uniquement $(k+1)^2$ points de contrôle et, réciproquement, ces $(k+1)^2$ points de contrôle n'influent que sur le seul et unique point de passage $Q'_{ij}$. Ainsi la position

d'un point de passage Q'$_{i,j}$ et des points des surfaces élémentaires adjacentes à ce point de passage Q'$_{i,j}$ est déterminée en fonction de la position d'un sous-ensemble de points de contrôle P$_{n,m}$ associé à ce point de passage Q'$_{i,j}$, à l'exclusion des points de contrôle non compris dans ce sous-ensemble, les sous-ensembles de points de contrôle P$_{nm}$ associés à des points de passage Q'$_{i,j}$ distincts étant disjoints

La construction du vecteur de noeuds telle que présentée dans ce mode de réalisation permet donc l'interpolation locale de la grille cartésienne de points de passage auxquels sont associés les k+1 premières dérivées partielles, tout en assurant une continuité d'ordre C$^k$.

On notera que cette continuité garantit également la continuité géométrique d'ordre k (appelée continuité G$^k$) qui caractérise de manière plus pertinente les propriétés géométriques intrinsèques, c'est-à-dire indépendantes de la représentation mathématique des surfaces. Par exemple, une surface de continuité géométrique G$^1$ est telle que le plan tangent est continu au passage d'une surface élémentaire à une autre. Pour les ordres plus élevés, on dit qu'une surface composite est de continuité géométrique G$^k$ si les dérivées d'un point quelconque de la surface par rapport à l'abscisse curviligne, également appelées dérivées intrinsèques, dans toute direction localement tangente à la surface, sont continues jusqu'à l'ordre k. Remarquons qu'une surface de continuité C$^k$ est nécessairement de continuité G$^k$, mais que la réciproque n'est pas vraie. Dans la pratique un niveau de continuité G$^2$ ou G$^3$ est généralement suffisant pour assurer les propriétés physiques souhaitées de la surface.

De plus, une déformation d'un point de passage Q'$_{i,j}$ ne modifie que les surfaces élémentaires partageant Q'$_{i,j}$.

En outre, comme pour l'algorithme d'interpolation B-spline cubique, on peut écrire le système suivant.
Q'=BP Où B est une matrice carrée (k+1)Nx(k+1)N diagonale par bloc, P est le vecteur des (k+1)Nx(k+1)N points de contrôle, et Q' est le vecteur de points de passage généralisés. Ce système, inversé, se réécrit sous la forme :
P= B$^{-1}$Q'

Où B$^{-1}$, inverse de la matrice B, est également une matrice diagonale par bloc.

La structure par bloc de B et de B$^{-1}$ illustre là encore le caractère locale de cette méthode d'interpolation où un point de passage définie un ensemble de (k+1)$^2$ points de contrôle et réciproquement.

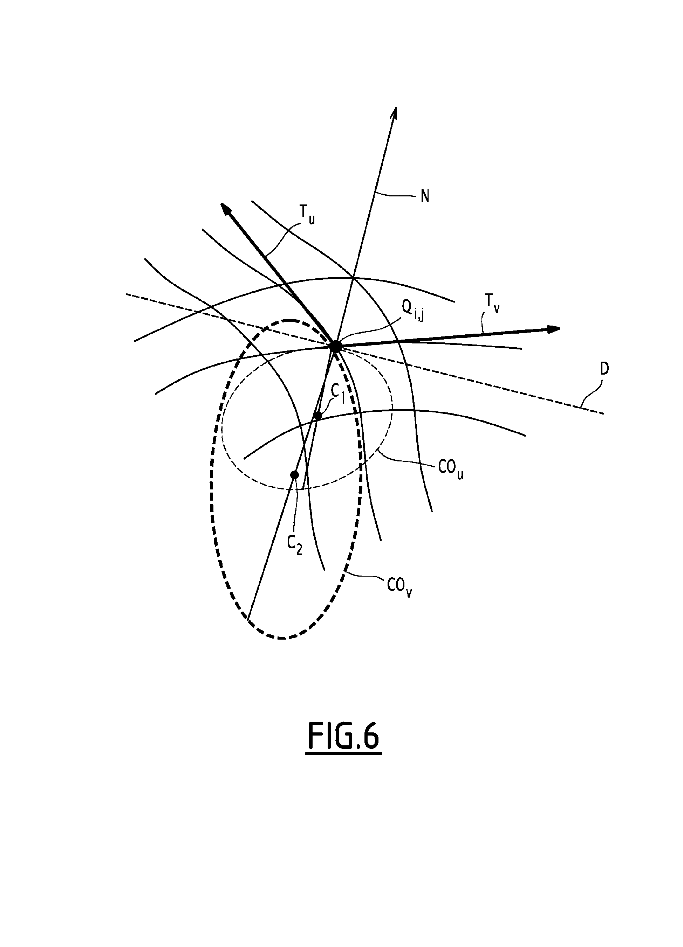

Selon le procédé de l'invention, la définition et la modification d'une surface est réalisée par manipulation, par l'utilisateur, d'une ou plusieurs conditions osculatrices de la surface en un ou plusieurs points de passage de cette surface. Ces conditions, illustrées sur la figure 6, comprennent, en chaque point de passage Q'$_{i,j}$:

-   la position de ce noeud;
-   les deux tangentes unitaires T$_u$ et T$_v$ (définissant également la normale N à la surface) dans les deux directions paramétriques u et v ou le plan tangent lui-même;
-   les deux centres de courbures C$_1$ et C$_2$ de la surface dans les directions paramétriques u et v (définissant, avec la position et les tangentes, les cercles osculateurs CO$_u$ et CO$_v$ à cette surface) ; et
-   une direction de courbure principale D (ou la courbure Gaussienne).

Dans la suite de la description et dans les revendications, on désignera ainsi par le terme général « condition osculatrice » d'une surface en un point de passage toute donnée comprise dans le groupe comprenant la position de ce point de passage, les tangentes unitaires dans les deux directions paramétriques u et v ou un plan tangent à la surface en ce point de passage, les deux centres de courbures de la surface dans les directions paramétriques u et v en ce point de passage, les cercles osculateurs à la surface en ce point de passage, définis par la position du point, les tangentes, et les centres de courbure de la surface au point de passage, et une direction de courbure principale de la surface en ce point de passage.

Ces conditions osculatrices sont reliées aux dérivées partielles jusqu'à l'ordre 2 de la surface au point de passage Q'$_{i,j}$ par les relations suivantes :

$$\frac{\partial S}{\partial u} = S_u = \lambda_u T_u$$

$$\frac{\partial S}{\partial v} = S_v = \lambda_v T_v$$

$$\frac{\partial^2 S}{\partial u^2} = S_{uu} = \mu_u T_u + \lambda_u^2 \kappa_u n_{cu}$$

$$\frac{\partial^2 S}{\partial v^2} = S_{vv} = \mu_v T_v + \lambda_v^2 \kappa_v n_{cv}$$

$$\frac{\partial^2 S}{\partial u \partial v} n_S = S_{uv} n_S = M$$

Dans les relations précédentes, les paramètres $\lambda_u$, $\lambda_v$, $K_u$, $K_v$, $\mu_u$, $\mu_v$ et M sont des scalaires, alors que $T_u$, $T_v$, $n_{cu}$, et $n_{cv}$ sont des vecteurs de $R^3$

Le réel M est plus précisément défini à partir de la courbure gaussienne K de la surface par :

$$M^2 = \lambda_u^2 \lambda_v^2 \left( \kappa_u \kappa_v \cos(\gamma_u) \cos(\gamma_v) - K \sin^2(\alpha) \right)$$

où $\gamma_u$ et $\gamma_v$ désignent respectivement les angles entre la normales unitaire à la surface $n_s$ et les normales unitaires de la courbe $n_{cu}$ et $n_{cv}$, $\alpha$ désigne l'angle formé par les vecteurs $T_u$ et $T_v$.

On peut donc identifier les conditions osculatrices, termes géométriques invariants de la représentation paramétrique (la position, les tangentes unitaires $T_u$ et $T_v$, les vecteurs courbures $\kappa_u n_{cu}$ et $\kappa_v n_{cv}$, la courbure gaussienne K, la normale à la surface $n_s$, ...) et les termes paramétriques directement liées à la paramétrisation ($\lambda_u$, $\lambda_v$, M, dérivées croisées, ...) de la surface.

Ces relations entre dérivées partielles et conditions osculatrices permettent de remplacer la manipulation des dérivées partielles, peu intuitive, par celles des conditions osculatrices. Ainsi, les variables sur lesquelles l'utilisateur peut agir pour modifier la surface S sont les conditions osculatrices de cette surface en ses points de passage. A partir de ces conditions osculatrices, le système détermine les dérivées partielles de la surface aux différents points de passage, c'est-à-dire le vecteur Q' défini ci-dessus, par l'étape de lissage décrite plus loin et en déduit la position des noeuds de contrôle P.

Notons que l'utilisateur a la possibilité de n'imposer qu'une partie des conditions osculatrices. Les autres conditions osculatrices sont libérées et constitueront des degrés de liberté supplémentaires dans l'étape de lissage.

Ainsi, ces conditions osculatrices libres, mais aussi les paramètres $\lambda$, et $\mu$ (généralement quelconques), les dérivées croisées

$$\frac{\partial^p S}{\partial^p u \partial^{p-l} v}$$

(à l'exception de la composante normale à la surface de la dérivée

$$\frac{\partial^2 S}{\partial u \partial v},$$

directement liée à la courbure gaussienne K) et les dérivées d'ordre supérieur à 2 manquent pour définir entièrement les dérivées partielles d'ordre k en $Q'_{i,j}$. Il existe donc une infinité de surfaces vérifiant la continuité $C^k$ et les conditions osculatrices spécifiées par un utilisateur.

Le procédé selon l'invention prévoit donc la sélection, parmi toutes les surfaces possibles, de celle qui présente un critère de qualité optimal pour l'utilisateur, tout en respectant les conditions osculatrices définies par l'utilisateur en chaque point de passage.

Ce critère de qualité peut dépendre de l'utilisation finale de la surface. En pratique il est souvent lié à des évolutions de courbures aussi régulières que possibles entre les conditions osculatrices définies aux points de passage. La surface choisie sera ainsi celle pour laquelle les évolutions de courbures entre les conditions osculatrices définies aux points de passage sont les plus régulières.

Dans un mode de réalisation particulier, la méthode d'optimisation choisie est la minimisation d'une énergie de déformation E faisant intervenir les courbures et, pouvant par exemple être une somme de dérivées au carré :

$$dE(u,v) = \sum_{p,q} \alpha_{pq} \left( \frac{\partial^{p+q} S}{\partial u^p \partial v^q} \right)^2$$

où les coefficients de pondération $\alpha_{pq}$ sont choisis par l'utilisateur. De la même façon, dans le cas des arcs, l'énergie peut par exemple être une somme de dérivées au carré :

$$dE(u) = \sum_{p} \alpha_p \left( \frac{\partial^p C}{\partial u^p} \right)^2$$

Si l'on veut simplement considérer les dérivées secondes on pourra choisir $\alpha_2 = 1$ et $\alpha_i = 0$ pour $i \neq 2$. Cependant, dans certaines applications, il peut être avantageux de choisir aussi $\alpha_1 = 1$ ou d'autres pondérations.

L'énergie de la surface (respectivement de la courbe), égale à la somme des surfaces (respectivement des arcs) élémentaires, est donc obtenue après intégration. Ainsi, pour les courbes

$$E = \int dE(u) du$$

et pour les surfaces

$$E = \iint dE(u,v) du dv$$

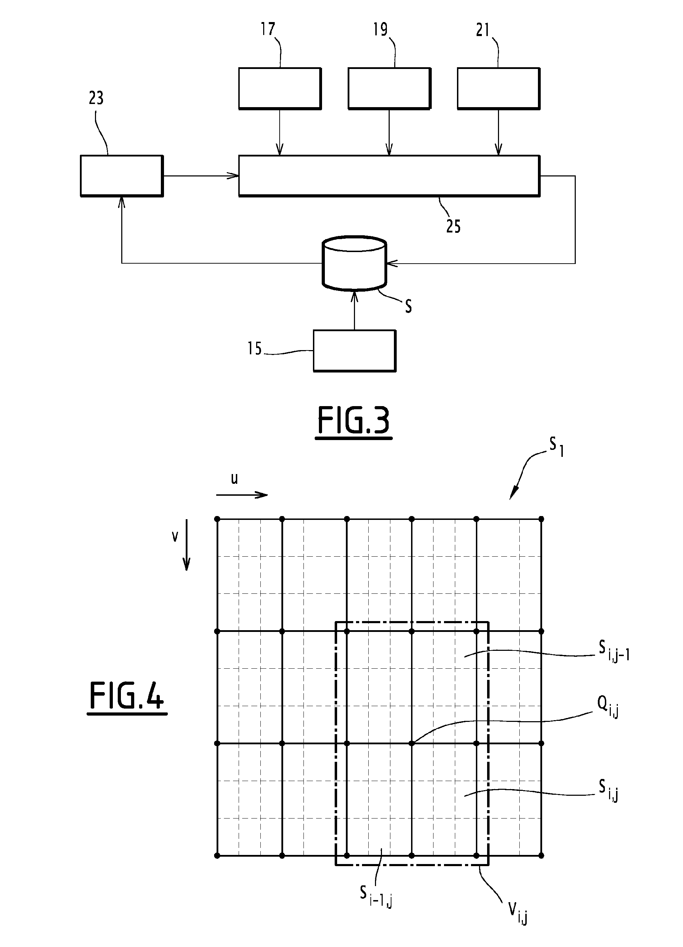

Cette énergie de déformation est fonction des variables d'optimisation telles que définies ci-dessus. Ces variables d'optimisation sont ainsi déterminées par minimisation de l'énergie E. Par conséquent, les dérivées partielles de la surface sont également définies par minimisation de l'énergie E. La figure 3 est un schéma synoptique illustrant les étapes du procédé de modélisation d'une surface telle que représentée sur la figure 2 selon un mode de réalisation de l'invention, ce procédé étant mis en oeuvre par le système décrit en référence à la figure 1.

Dans une étape 15 d'initialisation, le processeur 11 génère, à la demande de l'utilisateur, et par exemple à partir de la mémoire 13, une surface paramétrée initiale $S_1$, constituée d'une pluralité de surfaces élémentaires adjacentes dont les sommets $Q'_{i,j}$ sont des points de passage de la surface paramétrée. Cette surface $S_1$ est affichée sur le dispositif 7 d'affichage. Dans cette étape initiale, la surface peut être générée par tous les moyens connus pour générer des surfaces NURBS.

L'utilisateur choisit par ailleurs dans une étape 17 le niveau de continuité minimal $C^k$ que doit respecter la surface modélisée et une base de fonctions paramétrées, destinées à générer la surface par interpolation de ses points de passage $Q'_{i,j}$.

Avantageusement, k est au moins égal à 2.

Dans une étape 19, l'utilisateur choisit un point de passage $Q'_{ij}$ dont il souhaite modifier une ou plusieurs condition(s) osculatrice(s), et définit pour ce point de la surface les conditions osculatrices qu'il désire définir lui-même (leur valeur sera ultérieurement fixée par l'utilisateur dans l'étape 23), et celles qui sont laissées libres. Les valeurs des conditions osculatrices libres, ainsi que toutes les autres données nécessaires à la définition de la forme, seront par la suite déterminées, par lissage, par le processeur 11.

Notons qu'il est aussi possible de fixer partiellement certaines conditions osculatrices. Par exemple, il est possible de laisser une tangente ($T_u$ ou $T_v$) libre avec la condition qu'elle reste dans un plan défini par ailleurs. Il est également possible de laisser un point de passage $Q'_{i,j}$ libre à condition qu'il reste dans un plan ou sur une droite défini par ailleurs.

Dans l'étape 19, l'utilisateur définit également le voisinage, i.e. l'étendue des déformations engendrées par la modification de $Q'_{i,j}$. Pour cela, il choisit un ensemble connexe de surfaces élémentaires contenant au moins les surfaces élémentaires adjacentes à $Q'_{i,j}$.

Par exemple, si l'utilisateur souhaite que seules les quatre surfaces élémentaires ayant le noeud $Q'_{i,j}$ pour sommet soient modifiées lorsqu'une ou plusieurs conditions osculatrices de ce sommet sont modifiées, il n'associe aucune autre surface que les surfaces adjacentes à $Q'_{i,j}$

En pratique, si un point de passage $Q'_{k,l}$ appartient au voisinage du noeud modifié $Q'_{i,j}$, alors toute ses conditions osculatrices libres sont des variables d'optimisation ces valeurs étant déterminées par le processeur lors d'une étape ultérieure de lissage.

L'utilisateur choisit également dans une étape 21 une fonction dite « de lissage » qui permettra au système de déterminer, en chaque point de passage $Q'_{i,j}$, les valeurs des dérivées partielles en fonction des conditions osculatrices imposées par l'utilisateur.

Comme indiqué précédemment, dans un mode de réalisation particulier de l'invention, la fonction de lissage est définie à partir d'une énergie de déformation.

Dans une étape 23, l'utilisateur modifie une ou plusieurs conditions osculatrices qu'il a choisies comme étant fixes lors de l'étape 19, et fixe la valeur de ces conditions osculatrices.

Notons que ces données peuvent être définies par l'utilisateur par tous les moyens connus pour définir des points, des directions, des plans ou des cercles.

A partir de la définition de l'énergie de déformation, le processeur 11 détermine dans une étape 25 une surface respectant le voisinage et les conditions osculatrices fixées et minimisant l'énergie de déformation E choisie dans le voisinage du point $Q'_{i,j}$.

A cette fin, le processeur détermine tout d'abord, par lissage, et à partir des conditions osculatrices fixées par l'utilisateur, la valeur des dérivées partielles de la surface au point de passage $Q'_{i,j}$, ainsi que la valeur des dérivées partielles aux autres points de passage $Q'_{k,l}$ compris dans le voisinage du point $Q'_{i,j}$.

Puis, à partir de la valeur de ces dérivées partielles, le processeur détermine la position des points de contrôle des sous-ensembles associés aux points de passage compris dans ce voisinage du point $Q'_{i,j}$, c'est-à-dire au point de passage $Q'_{i,j}$ et aux autres points de passage $Q'_{k,l}$ compris dans ce voisinage, à partir de l'équation:
$P = B^{-1}Q'$.

Deux cas de figure peuvent être ainsi distingués.

Si le voisinage défini lors de l'étape 19 comprend uniquement les surfaces élémentaires adjacentes du point de passage $Q'_{i,j}$, lors de cette étape 25, le processeur détermine la valeur des dérivées partielles de la surface seulement au point de passage $Q'_{i,j}$. Comme précédemment expliqué, puisque seul le point de passage généralisé $Q'_{ij}$ est modifié, seuls les points de contrôle $P_{nm}$ du sous-ensemble associé au point de passage $Q'_{i,j}$ sont modifiés, donc seules les surfaces ayant le point de passage $Q'_{i,j}$ pour sommet sont effectivement modifiées.

Si le voisinage défini lors de l'étape 19 comprend, outre les quatre surfaces élémentaires adjacentes du point de passage $Q'_{i,j}$, une ou plusieurs surfaces élémentaires, les variables d'optimisation comprennent en outre les dérivées partielles des points appartenant à ce voisinage. Dès lors, les points de contrôle des sous-ensembles associés au(x) point(s) de passage $Q'_{k,l}$ sont modifiés, et les surfaces ayant ce(s) point(s) $Q'_{k,l}$ pour sommet(s) sont également modifiées.

Ainsi, à l'issue de l'étape 25 :

- les conditions osculatrices fixées par l'utilisateur ont été prises en compte et toutes respectées,
- tous les points de contrôle de la surface ont été déterminés par le système de sorte que la surface est la plus lisse possible,
- la continuité $C^k$ spécifiée est vérifiée,
- seules les surfaces élémentaires comprises dans le voisinage sélectionné par l'utilisateur ont été modifiées.

Les étapes 17 à 25 du procédé selon l'invention peuvent alors être réitérées pour modifier à nouveau la surface S, jusqu'à ce que l'utilisateur juge que sa forme réponde à son cahier des charges. Notons qu'il n'y a pas d'ordre particulier pour exécuter les étapes 17 à 21. Par exemple les étapes 17 à 21 peuvent être exécutées au début du processus ou même définies par défaut dans le système et l'utilisateur peut n'itérer que sur les étapes 23 et 25.

Les figures 4 à 8 illustrent un exemple de mise en oeuvre du procédé décrit en référence à la figure 3.

La figure 4 représente ainsi une surface paramétrée initiale $S_1$, telle que générée par le processeur 11 lors de l'étape 15 du procédé.

La surface $S_1$ est une surface définie à partir d'une première famille de quatre courbes selon la direction paramétrique u et de six courbes selon la direction paramétrique v, délimitant 15 surfaces élémentaires.

On supposera par la suite que l'utilisateur souhaite modifier une ou plusieurs conditions osculatrices d'un point de passage de la surface, par exemple le point désigné $Q'_{i,j}$, choisi dans l'étape 19 du procédé, en modifiant uniquement les surfaces élémentaires adjacentes à ce point, tout en conservant une continuité au moins $C^2$. Pour obtenir ce niveau de continuité le système 11 utilisera, par exemple, une base de fonctions B-spline de degré 3.

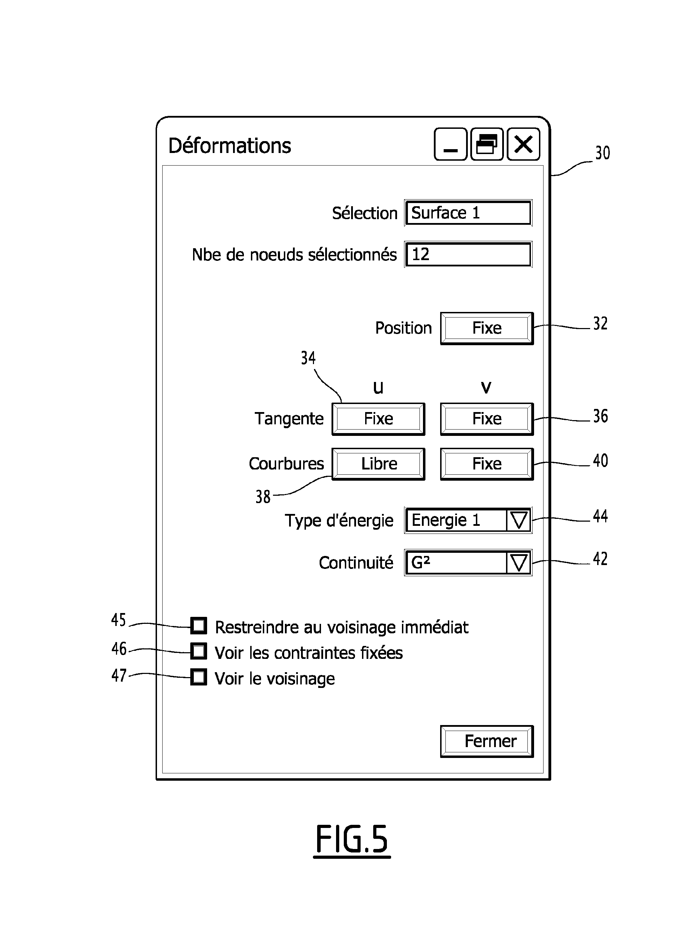

A cette fin, l'utilisateur sélectionne la surface à déformer, ce qui provoque l'affichage sur le dispositif 7 d'affichage d'une fenêtre 30 d'interface, telle qu'illustrée sur la figure 5.

Cette fenêtre 30 d'interface permet à l'utilisateur de sélectionner un ensemble de points et d'y spécifier les conditions osculatrices libres et celles fixées. La fenêtre 30 d'interface comprend donc une pluralité de boutons 32 à 44 sur lesquels l'utilisateur peut agir, au moyen des périphériques 9 d'entrée, pour alternativement contraindre ou libérer les conditions osculatrices aux points de passage sélectionnés. En particulier, le bouton 32 peut être actionné pour libérer ou contraindre la position du point de passage $Q'_{i,j}$, les boutons 34 et 36 pour libérer ou contraindre les tangentes en ce point suivant les directions paramétriques respectives u et v, et les boutons 38 et 40 pour libérer ou contraindre la courbure de la surface suivant les directions paramétriques respectives u et v, conformément à l'étape 19 du procédé.

Au moyen de cette fenêtre 30 l'utilisateur spécifie également la continuité désirée, c'est-à-dire la valeur k de la continuité $C^k$ (par exemple $C^2$) à l'aide du bouton 42, selon l'étape 17 du procédé. L'utilisateur choisit aussi via cette fenêtre 30 l'énergie de lissage qui servira à déterminer les données libres de la surface à l'aide du bouton 44, conformément à l'étape 21 du procédé selon l'invention.

Trois cases activables 45, 46 et 47 permettent respectivement, lorsqu'elles sont activées, de restreindre la déformation de la surface au voisinage immédiat du point $Q'_{i,j}$ dont la position est modifiée, d'afficher sur le dispositif 7 d'affichage les conditions osculatrices fixées, et d'afficher sur le dispositif 7 d'affichage le voisinage du point $Q'_{i,j}$ auquel s'étendra la déformation de la surface.

Après avoir sélectionné tous les points de passage de la surface, l'utilisateur fixe toutes les conditions osculatrices de tous les points de la surface en cliquant sur les boutons 32 à 40, selon l'étape 23 du procédé décrite ci-dessus. Ainsi, toute surface élémentaire dont les quatre sommets sont ainsi contraints est elle-même complètement contrainte. L'utilisateur sélectionne alors le point $Q'_{i,j}$ et libère les tangentes et les courbures à l'aide des boutons 34 à 40.

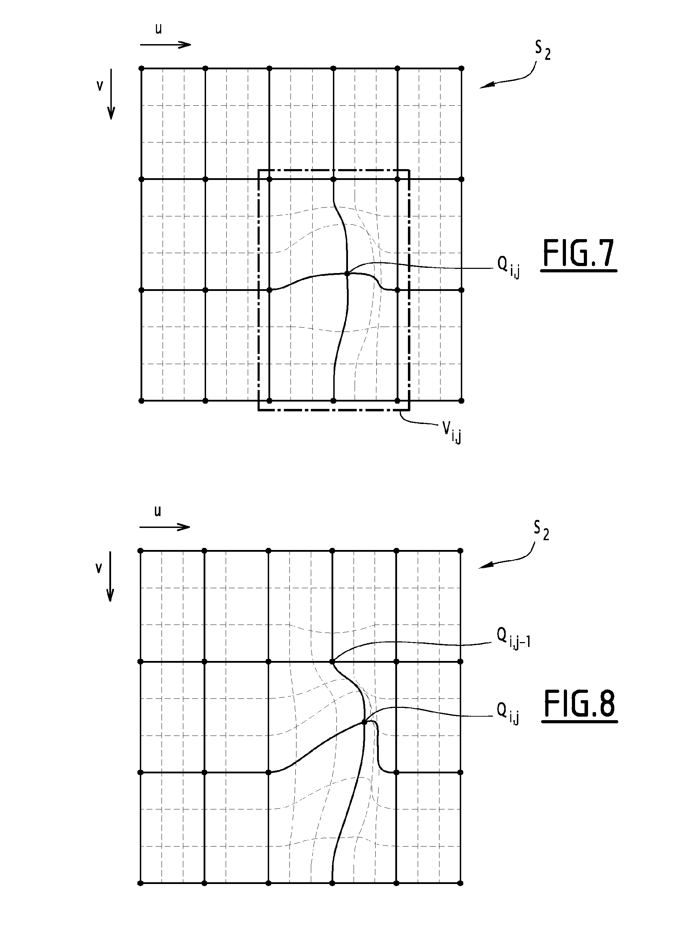

L'utilisateur spécifie enfin dans cette étape 23 une nouvelle position de $Q'_{i,j}$ (par exemple en saisissant de nouvelles coordonnées de position ou en déplaçant ce point sur le dispositif d'affichage 7 par l'intermédiaire d'une souris). Après détermination par le processeur, lors de l'étape 25, de l'équation de la surface vérifiant les conditions osculatrices, les conditions de voisinage et la continuité $C^k$ choisies par l'utilisateur, seules les quatre surfaces élémentaires adjacentes à $Q'_{i,j}$ sont déformées, c'est-à-dire son voisinage $V_{i,j}$. La déformation est restreinte au voisinage immédiat de $Q'_{i,j}$ et elle est donc locale. Une telle déformation locale est illustrée sur la figure 7.

L'utilisateur peut également choisir d'élargir le voisinage des déformations, lors de l'étape 19 du procédé, par exemple choisir de libérer également le point de passage $Q'_{i,j-1}$. Pour ce faire, l'utilisateur sélectionne ce point $Q'_{i,j-1}$, et une fenêtre 30 d'interface réapparaît sur le dispositif 7 d'affichage. L'utilisateur clique alors sur les boutons 34 à 40 pour libérer les tangentes et les courbures au point $Q'_{i,j-1}$, puis il spécifie une nouvelle valeur de position du point $Q'_{i,j}$. Six surfaces élémentaires sont alors déformées (toutes les surfaces adjacentes à $Q'_{i,j}$ ou à $Q'_{i,j-1}$) comme l'illustre la figure 8. La déformation est appliquée à un voisinage plus grand, car elle n'est plus limitée aux quatre surfaces élémentaires adjacentes, mais elle reste néanmoins circonscrite à un voisinage totalement maîtrisé par l'utilisateur.

Enfin, l'utilisateur peut également choisir lors de l'étape 19 de libérer toutes les conditions osculatrices de tous les points de passage. Pour cela, il sélectionne l'ensemble des points de passage. Il clique sur les boutons 34 à 40 pour libérer les tangentes et les courbures et il spécifie une nouvelle position pour le point $Q'_{i,j}$. Cette fois-ci, toutes les surfaces élémentaires sont déformées et le voisinage correspond à la surface entière. Les valeurs de leurs tangentes et de leurs courbures ont toutes été modifiées et déterminées en fonction de l'énergie de lissage choisie précédemment.

Le système de modélisation selon l'invention permet ainsi de générer une surface lisse, de continuité géométrique $C^k$ choisi par l'utilisateur, et à partir d'un faible nombre d'éléments de contrôle, par rapport aux éléments de contrôle des modeleurs selon l'état de la technique. De plus, ce système permet à l'utilisateur de contrôler et de choisir l'étendue de la surface modifiée lors d'un changement des conditions osculatrices en un point de passage, contrairement aux modeleurs selon l'état de la technique. En outre, il n'est pas nécessaire de fixer l'ensemble des conditions osculatrices en chacun des points de passage, et certaines, voire la totalité de ces conditions osculatrices peuvent être laissées libres. Le système détermine alors la valeur de ces conditions osculatrices libres, optimisant le lissage de la surface.

Dans tous les exemples ci-dessus, si l'utilisateur avait spécifié un niveau de continuité $C^3$, le système aurait choisi, par exemple, une base de fonctions b-spline de degré 5 avec une multiplicité de 2 en chaque point interne. Alors que le nombre de points de contrôle selon un procédé NURBS passe de 9 par point à 16 par point en passant de la continuité $C^2$ à la continuité $C^3$, le nombre de points de passage et de conditions osculatrices reste inchangé dans le mode de réalisation de la présente invention.

Il devra toutefois être compris que les exemples de réalisation présentés ci-dessus ne sont pas limitatifs.

Notamment, selon un autre mode de réalisation, l'énergie de déformation peut être définie en associant à la surface des propriétés mécaniques telles que son épaisseur, son inertie ou sa raideur en torsion-flexion de façon à calculer effectivement l'énergie physique nécessaire pour déformer la surface à partir d'une surface plane.

On notera également qu'il existe d'autres façons d'obtenir une forme optimale qu'en minimisant une énergie de déformation comme par exemple en cherchant à minimiser les maximas de courbures d'une surface ou d'un arc.

On notera par ailleurs que certaines étapes du procédé selon l'invention mises en oeuvre par l'utilisateur peuvent être réalisées de façon automatique, le procédé selon l'invention pouvant même être intégré à un processus d'optimisation de formes complètement automatisé.

## Revendications

1. Procédé de modélisation d'une surface géométrique (S, S$_1$, S$_2$) pour la conception de pièces, à partir d'une pluralité de points de passage (Q'$_{i,j}$) auxquels sont associées des conditions osculatrices (T$_u$, T$_v$, N, D, CO$_u$, CO$_v$), ladite surface géométrique (S, S$_1$, S$_2$) comprenant au moins une surface élémentaire (S$_{i,j}$) dont les sommets sont des points de passage (Q'$_{i,j}$), l'équation de la surface géométrique (S, S$_1$, S$_2$) étant exprimée à partir d'une base de fonctions paramétriques destinée à générer ladite surface géométrique (S, S$_1$, S$_2$) par interpolation desdits points de passage (Q'$_{i,j}$), en fonction de la position d'un ensemble de points de contrôle (P$_{nm}$),

   **caractérisé en ce que** la position d'un point de passage (Q'$_{i,j}$) et des points des surfaces élémentaires (V$_{i,j}$) adjacentes à ce point de passage (Q'$_{i,j}$) est déterminée en fonction de la position d'un sous-ensemble de points de contrôle (P$_{nm}$) associé à ce point de passage (Q'$_{i,j}$), à l'exclusion des points de contrôle non compris dans ce sous-ensemble, les sous-ensembles de points de contrôle (P$_{nm}$) associés à des points de passage (Q'$_{i,j}$) distincts étant disjoints, et **en ce que** le procédé comprend les étapes suivantes, mises en oeuvre par une unité (3) de traitement et de stockage comprenant un processeur (11) et une mémoire (13) :

   - sélection (17) de la base de fonctions paramétriques, en fonction d'un niveau de continuité minimal d'ordre k (G$^k$) choisi, avec k nombre entier strictement supérieur à 1, sur l'ensemble de ladite surface géométrique (S, S$_1$, S$_2$);
   - sélection (19), pour un point de passage prédéterminé (Q'$_{i,j}$), d'un voisinage de ce point de passage prédéterminé (Q'$_{i,j}$), ledit voisinage comprenant au moins les surfaces élémentaires (V$_{i,j}$) adjacentes à ce point de passage prédéterminé (Q'$_{i,j}$);
   - détermination (25), en fonction de valeurs fixées d'au moins une partie des conditions osculatrices (T$_u$, T$_v$, N, D, CO$_u$, CO$_v$) dudit point de passage prédéterminé (Q'$_{i,j}$), de la position des points de contrôle (P$_{nm}$) du sous-ensemble associé à chaque point de passage de la surface géométrique (S, S$_1$, S$_2$) compris dans ledit voisinage,
   - détermination de la position des points de la surface géométrique (S, S$_1$, S$_2$) compris dans ledit voisinage, en fonction de la position des points de contrôle (P$_{nm}$) du sous-ensemble associé à chaque point de passage de la surface géométrique (S, S$_1$, S$_2$) compris dans ledit voisinage.

2. Procédé de modélisation selon la revendication 1, **caractérisé en ce que** la position des points de la surface géométrique (S, S$_1$, S$_2$) est déterminée à partir d'une équation de la surface exprimée en fonction de la position desdits points de contrôle (P$_{nm}$) sous la forme :

$$S(u,v) = \sum_{n=0}^{(k+1)N} \sum_{m=0}^{(k+1)M} b_n^{k+1}(u) b_m^{k+1}(v) P_{n,m} \ ,$$

dans laquelle u et v sont des paramètres de la surface géométrique , S(u,v) désigne la position d'un point de la surface, chaque P$_{n,m}$ désigne un point de contrôle d'indices $n$ et $m$, et $b_n^{k+1}$ et $b_m^{k+1}$ sont des fonctions de la base de fonctions paramétriques telles que $b_n^{k+1}(u)$ est non nulle si et seulement si $u_n \leq u < u_{n+k+2}$ et continue d'ordre k sur ce même intervalle.

3. Procédé de modélisation selon l'une quelconque des revendications 1 ou 2, **caractérisé en ce que** l'étape (25) de détermination de la position des points de contrôle (P$_{nm}$) comprend les étapes suivantes :

   - détermination, en fonction d'au moins une partie des conditions osculatrices (T$_u$, T$_v$, N, D, CO$_u$, CO$_v$) dudit

point de passage prédéterminé ($Q'_{i,j}$), de la valeur des dérivées partielles jusqu'à l'ordre k de la surface géométrique (S, $S_1$, $S_2$) aux points de passage ($Q'_{kl}$) inclus dans ledit voisinage ; et
- détermination, en fonction de la valeur desdites dérivées partielles, de la position desdits points de contrôle ($P_{nm}$).

4. Procédé de modélisation selon la revendication 3, **caractérisé en ce que** l'étape de détermination de la valeur desdites dérivées partielles comprend une étape de détermination de la valeur de conditions osculatrices ($T_u$, $T_v$, N, D, $CO_u$, $CO_v$) non fixées dudit point de passage prédéterminé ($Q'_{i,j}$).

5. Procédé de modélisation selon l'une quelconque des revendications 3 ou 4, **caractérisé en ce que** l'étape de détermination de la valeur desdites dérivées partielles comprend une étape d'optimisation d'un critère de qualité de la surface géométrique (S, $S_1$, $S_2$) choisi par un utilisateur.

6. Procédé de modélisation selon la revendication 5, **caractérisé en ce que** l'étape de détermination de la valeur desdites dérivées partielles comporte :

   - une étape de détermination d'une énergie de déformation (E) représentative d'une déformation locale dudit voisinage ; et
   - une étape de détermination de la valeur desdites dérivées partielles qui minimise ladite énergie de déformation (E).

7. Procédé de modélisation selon la revendication 6, **caractérisé en ce que** ladite énergie de déformation (E) est déterminée à partir d'une combinaison des énergies de déformation des surfaces élémentaires et des énergies de déformation des arcs élémentaires dudit voisinage du point prédéterminé ($Q'_{i,j}$).

8. Procédé de modélisation selon l'une quelconque des revendications précédentes, **caractérisé en ce que** les sous-ensembles de points de contrôle ($P_{n',m}$) associés à des points de passage distincts quelconques sont disjoints

9. Procédé de modélisation selon l'une quelconque des revendications précédentes, **caractérisé en ce que** ledit voisinage est uniquement constitué des surfaces élémentaires ($V_{i,j}$) ayant le point de passage prédéterminé ($Q'_{i,j}$) pour sommet.

10. Procédé de modélisation selon l'une quelconque des revendications précédentes, **caractérisé en ce que** la sélection (19) dudit voisinage du point de passage prédéterminé comprend la sélection des points de passage ($Q'_{k,l}$) compris dans ledit voisinage.

11. Procédé de modélisation selon l'une quelconque des revendications précédentes, **caractérisé en ce que** lesdites conditions osculatrices ($T_u$, $T_v$, N, D, $CO_u$, $CO_v$) sont choisies parmi la position du point de passage ($Q'_{i,j}$), la direction des tangentes ($T_u$, $T_v$), la direction normale (N) et la courbure de la surface en ce point, le centre et le rayon du cercle osculateur ($CO_u$, $CO_v$) à la surface en ce point, et les directions de courbure principale (D).

12. Procédé de modélisation selon l'une quelconque des revendications précédentes, **caractérisé en ce que** l'ensemble de ses étapes sont mises en oeuvre de façon automatisée par un automate d'optimisation de forme.

13. Système (1) de modélisation d'une surface géométrique (S, $S_1$, $S_2$) pour la conception de pièces, à partir d'une pluralité de points de passage ($Q'_{i,j}$) auxquels sont associées des conditions osculatrices ($T_u$, $T_v$, N, D, $CO_u$, $CO_v$), ladite surface géométrique (S, $S_1$, $S_2$) comprenant au moins une surface élémentaire (six) dont les sommets sont des points de passage ($Q'_{i,j}$), l'équation de la surface géométrique (S, $S_1$, $S_2$) étant exprimée à partir d'une base de fonctions paramétriques destinée à générer ladite surface géométrique (S, $S_1$, $S_2$) par interpolation desdits points de passage ($Q'_{i,j}$), en fonction de la position d'un ensemble de points de contrôle ($P_{nm}$),
**caractérisé en ce que** la position d'un point de passage ($Q'_{i,j}$) et des points des surfaces élémentaires ($V_{i,j}$) adjacentes à ce point de passage ($Q'_{i,j}$) est déterminée en fonction de la position d'un sous-ensemble de points de contrôle ($P_{nm}$) associé à ce point de passage ($Q'_{i,j}$), à l'exclusion des points de contrôle non compris dans ce sous-ensemble, les sous-ensembles de points de contrôle ($P_{nm}$) associés à des points de passage ($Q'_{i,j}$) distincts étant disjoints, et **en ce que** le système comprend une unité (3) de traitement et de stockage comprenant un processeur (11) et une mémoire (13), et comprend:

   - des moyens pour sélectionner la base de fonctions paramétriques, en fonction d'un niveau de continuité minimal d'ordre k ($G^k$) choisi, avec k nombre entier strictement supérieur à 1, sur l'ensemble de ladite surface géométrique ($S$, $S_1$, $S_2$);

- des moyens pour sélectionner, pour un point de passage prédéterminé ($Q'_{i,j}$), un voisinage de ce point de passage prédéterminé ($Q'_{i,j}$), ledit voisinage comprenant au moins les surfaces élémentaires ($V_{i,j}$) adjacentes à ce point de passage prédéterminé ($Q'_{i,j}$);

- des moyens pour déterminer, en fonction de valeurs fixées d'au moins une partie des conditions osculatrices ($T_u$, $T_v$, $N$, $D$, $CO_u$, $CO_v$) dudit point de passage prédéterminé ($Q'_{i,j}$), la position des points de contrôle ($P_{nm}$) du sous-ensemble associé à chaque point de passage de la surface géométrique ($S$, $S_1$, $S_2$) compris dans ledit voisinage,

- des moyens pour déterminer la position des points de la surface géométrique ($S$, $S_1$, $S_2$) compris dans ledit voisinage, en fonction de la position des points de contrôle ($P_{nm}$) du sous-ensemble associé à chaque point de passage de la surface géométrique ($S$, $S_1$, $S_2$) compris dans ledit voisinage.

## FIG.1

## FIG.2

FIG.3

FIG.4

Déformations  ☐ ☐ ☒  —— 30

Sélection  | Surface 1 |

Nbe de noeuds sélectionnés  | 12 |

Position  | Fixe |  —— 32

34

u  v

Tangente  | Fixe |  | Fixe |  —— 36

Courbures  | Libre |  | Fixe |  —— 40

38

Type d'énergie  | Energie 1 ▽ |  —— 44

Continuité  | G² ▽ |  —— 42

45 —— ☐ Restreindre au voisinage immédiat
46 —— ☐ Voir les contraintes fixées
47 —— ☐ Voir le voisinage

| Fermer |

## FIG.5

FIG.6

FIG.7

FIG.8

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Littérature non-brevet citée dans la description**

- **BOEHM W. et al.** A survey of curves and surface methods in CAGD. *Computer Aided Geometric Design,* vol. 1, 1-60
- **TILLER W. ; PIEGL L.** The NURBS Book. Springer-Verlag
- **PRESS W. et al.** Numerical Recipes in C : The Art of Scientific Computing. Cambridge University Press